# EUROPÄISCHE PATENTANMELDUNG

(11) **EP 4 361 440 A1**
(43) Veröffentlichungstag der Anmeldung: **01.05.2024**
(21) Anmeldenummer: 23204824.9
(22) Anmeldetag: 20.10.2023
(51) Int. Cl.: F04C 2/18

(54) **ZAHNRADPUMPE, ANTRIEBSVORRICHTUNG UND VERSTELLPROPELLER**

(30) Priorität: 28.10.2022 DE 102022128671
(71) Anmelder: Rolls-Royce Deutschland Ltd & Co KG, 15827 Blankenfelde-Mahlow (DE)
(72) Erfinder: VENTER, Gideon Daniel, 15827 Blankenfelde-Mahlow (DE); MEYER, Franz, 15827 Blankenfelde-Mahlow (DE)

(57) **Zusammenfassung**

Es wird eine Zahnradpumpe (6) mit wenigstens zwei Zahnrädern (7, 8) beschrieben, die miteinander in Eingriff stehen, jeweils drehfest mit einer Welle (9, 10) verbunden sind und eine Saugseite (11) von einer Förderseite (12) trennen. Die Wellen (9, 10) sind in einem Gehäuse (13) gelagert. Eine der Wellen (10) ist mit einer Antriebseinheit (4) und die andere Welle (9) ist mit einer von der Antriebseinheit (4) über die beiden Wellen (9, 10) anzutreibenden Druckregeleinrichtung (14) in Wirkverbindung bringbar. Des Weiteren wird eine Antriebsvorrichtung (3) zum Einstellen eines Anstellwinkels von Propellerblättern eines Verstellpropellers mit der Zahnradpumpe (6) vorgeschlagen. Zusätzlich wird auch ein Verstellpropeller mit der Antriebsvorrichtung (3) beschrieben.

## Beschreibung

Die vorliegende Offenbarung betrifft eine Zahnradpumpe mit wenigstens zwei Zahnrädern, die miteinander in Eingriff stehen, jeweils drehfest mit einer Welle verbunden sind und eine Saugseite von einer Förderseite trennen. Des Weiteren betrifft die vorliegende Offenbarung eine Antriebsvorrichtung zum Einstellen eines Anstellwinkels von Propellerblättern eines Verstellpropellers mit einer solchen Zahnradpumpe. Zusätzlich betrifft die vorliegende Offenbarung einen Verstellpropeller mit einer solchen Antriebsvorrichtung.

Generell stellen Zahnradpumpen jeweils eine Maschine zur Förderung von Flüssigkeiten sowie zum kraftübertragenden Antrieb von Hydraulikmotoren dar. Hierfür umfassen Zahnradpumpen prinzipiell jeweils ein Gehäuse mit einem Zu- und einem Ablauf sowie zwei Zahnräder, wovon eines angetrieben wird. Je nach Anordnung und Art der Zahnräder unterscheidet man zwischen Außenzahnradpumpen, Innenzahnradpumpen, Zahnringpumpen und Schraubenpumpen. Bei einer Au-ßenzahnradpumpe mit Evolventen-Verzahnung wird das zu fördernde Medium in den Räumen zwischen Zähnen und Gehäuse transportiert. Aufgrund ihres einfachen Aufbaus sind Außenzahnradpumpen robust und preiswert.

Zahnradpumpen werden auch im Bereich von Antriebsvorrichtungen von sogenannten Verstellpropellern eingesetzt, um Anstellwinkel von Propellerblättern mittels hydraulischem Druck zu verstellen. Solche Verstellpropeller kommen unter anderem als Luftschrauben oder als Schiffspropeller zum Einsatz. Die Blattsteigung (Pitch) von in der Luftfahrt eingesetzten Luftschrauben kann durch Verdrehen der Propellerblätter am Boden oder während des Flugs verstellt werden. Grundsätzlich kommt hierfür eine automatische oder manuelle Verstellung in Betracht. Auch kann der Verstellpropeller eine stufenlose Änderung der Steigung oder auch nur in bestimmte Stufen ermöglichen.

Bei sogenannten Fest-Drehzahlpropellern bleibt die Motordrehzahl konstant und die Schubkraft wird nur durch die Verstellung der Anstellwinkel der Propellerblätter geregelt. Im Bedarfsfall steht dann sofort die volle Motorleistung zur Verfügung, da nicht erst Massen des Antriebsmotors zu beschleunigen sind.

Des Weiteren ist mittels Verstellpropellern auch eine Schubumkehr sowie eine Segelstellung darstellbar, wobei in der Segelstellung von Propellerblättern im Triebwerkstillstand der geringste Luftwiderstand vorliegt.

Bislang bekannte Antriebsvorrichtungen zum Einstellen eines Anstellwinkels von Propellerblättern eines Verstellpropellers sind mit einer Zahnradpumpe ausgeführt, die den hydraulischen Druck erzeugt, mit dem eine Druckregeleinrichtung zur Vermeidung von Kavitation versorgt wird. Eine solche Druckregeleinrichtung (Governor) wird wie die Zahnradpumpe über ein sogenanntes Hilfsgerätegetriebe angetrieben, das mit einer Antriebswelle einer Antriebseinheit und mit einer Antriebswelle der Druckregeleinrichtung verbunden ist. Die Druckregeleinrichtung stellt den zum Verstellen der Anstellwinkel der Propellerblätter erforderlichen hydraulischen Druck zur Verfügung.

Nachteilhafterweise sind die bislang bekannten Antriebsvorrichtungen für Verstellpropeller konstruktiv aufwändig, weisen einen hohen Bauraumbedarf auf und sind zudem durch ein hohes Gesamtgewicht gekennzeichnet.

Der vorliegenden Offenbarung liegt die Aufgabe zugrunde, bislang bekannte Ausführungen von Zahnradpumpen und Antriebsvorrichtungen insbesondere für Verstellpropeller konstruktiv einfach, leicht sowie kosten- und bauraumgünstig auszuführen. Zusätzlich liegt der vorliegenden Offenbarung die Aufgabe zugrunde, einen kosten- und bauraumgünstigen Verstellpropeller zur Verfügung zu stellen, der zusätzlich ein geringes Gesamtgewicht aufweist.

Diese Aufgabe wird mit einer Zahnradpumpe, mit einer Antriebsvorrichtung und mit einem Verstellpropeller mit den Merkmalen des Patentanspruches 1, 9 bzw. 26 gelöst.

Gemäß einem ersten Aspekt der vorliegenden Offenbarung wird eine Zahnradpumpe, vorzugsweise eine Außenzahnradpumpe, mit wenigstens zwei Zahnrädern bereitgestellt, die miteinander in Eingriff stehen. Die Zahnräder sind jeweils drehfest mit einer Welle verbunden und trennen eine Saugseite von einer Förderseite der Zahnradpumpe. Die Wellen sind drehbar in einem Gehäuse gelagert. Eine der Wellen ist mit einer Antriebseinheit und die andere Welle ist mit einer von der Antriebseinheit über die beiden Wellen anzutreibenden Druckregeleinrichtung in Wirkverbindung bringbar.

Somit weist die Zahnradpumpe gemäß der vorliegenden Offenbarung neben der für Pumpen üblichen Funktion, Fluid, wie Hydraulikfluid bzw. Öl, zu fördern und einen Ölvolumenstrom zur Verfügung zu stellen, eine weitere Funktionalität auf. Die weitere Funktion ist, das zum Antrieb an der Zahnradpumpe anliegende Drehmoment in Richtung einer mit der Zahnradpumpe wirkverbundenen Einrichtung, d. h. vorliegend der Druckregeleinrichtung weiterzuleiten. Mit anderen Worten übertragen die miteinander kämmenden Zahnräder der Zahnradpumpe das an einer der Wellen anliegende Antriebsmoment der Zahnradpumpe auf die andere Welle der Zahnradpumpe, die mit einer anzutreibenden Einrichtung gekoppelt ist.

Durch den Einsatz einer solchen Zahnradpumpe wird auf konstruktiv einfache und bauraumgünstige Art und Weise erreicht, dass die Druckregeleinrichtung oder eine beliebige andere Einrichtung von einer Antriebseinheit ohne ein separates Getriebe mit der gewünschten Antriebsleistung antreibbar ist.

Bei einer vorteilhaften Weiterbildung der Zahnradpumpe gemäß der vorliegenden Offenbarung ist die Förderseite der Zahnradpumpe fluidisch mit einer Versorgungsleitung der Druckregeleinrichtung und eine Regeldruck führende Leitung der Druckregeleinrichtung fluidisch mit einer Leitung verbindbar, die durch eine der Wellen der Zahnradpumpe verläuft. Bei dieser Ausführungsform der Zahnradpumpe gemäß der vorliegenden Offenbarung weist die Zahnradpumpe eine weitere Funktionalität auf. Die weitere Funktion der Zahnradpumpe besteht darin, dass das Fluid, das die Druckregeleinrichtung zur Verfügung stellt, durch eine der Wellen der Zahnradpumpe in Richtung eines hydraulischen Verbrauchers weitergeleitet wird. Dabei ist von Vorteil, dass das Fluid der Druckregeleinrichtung mit geringem konstruktivem Aufwand sowie mit geringen Dichtungsaufwand und mit einer geringen Bauteilanzahl in Richtung eines hydraulischen Verbrauchers durch die Zahnradpumpe führbar ist.

Wenn ein Übersetzungsverhältnis zwischen den Zahnrädern der Zahnradpumpe gemäß der vorliegenden Offenbarung ungleich eins ist, ist die Druckregeleinrichtung von der Antriebseinheit in gewünschter Art und Weise mit der erforderlichen Drehzahl antreibbar.

Die Wellen der Zahnradpumpe gemäß der vorliegenden Offenbarung können jeweils als Hohlwellen ausgebildet sein, um die Wellen mit einem günstigen Bauteilgewicht-Bauteilfestigkeits-Verhältnis ausführen zu können.

Die Welle, die mit der anzutreibenden Druckregeleinrichtung koppelbar ist, kann mit einem innenseitigen oder einem außenseitigen Keilwellenprofil ausgeführt sein, das mit einem außenseitigen oder mit einem innenseitigen Keilwellenprofil einer Antriebswelle bzw. Koppelwelle der Druckregeleinrichtung in Eingriff bringbar ist. Dann ist die Zahnradpumpe gemäß der vorliegenden Offenbarung auf einfache Art und Weise mit der Druckregeleinrichtung verbindbar.

Die Wellen der Zahnradpumpe gemäß der vorliegenden Offenbarung können über Lagerbuchsen, vorzugsweise Gleitlagerbuchsen im Gehäuse drehbar gelagert sein. Dabei besteht auf konstruktiv einfache Art und Weise die Möglichkeit, dass die Lagerbuchsen die Saugseite und die Förderseite gegenüber der Umgebung der Zahnradpumpe und gegenüber der Leitung in der Welle sowie gegenüber der Regeldruck führenden Leitung der Druckregeleinrichtung abdichten.

In axialer Richtung kann zwischen der Lagerbuchse und dem Wellenende der Welle, die mit der Antriebseinheit koppelbar ist, ein Radialwellendichtring vorgesehen sein. Mittels des Radialwellendichtrings kann ein Axialspalt zwischen der Welle und dem Gehäuse abdichtet sein, um auf konstruktiv einfache Art und Weise einen Austritt von Fluid, wie Hydraulikfluid bzw. Öl, aus dem Gehäuse der Zahnradpumpe zu vermeiden.

Der Axialspalt zwischen der Lagerbuchse und dem Radialwellendichtring steht bei einer Weiterbildung der Zahnradpumpe gemäß der vorliegenden Offenbarung über eine im Gehäuse verlaufende Entlüftungsleitung mit einem im Wesentlichen drucklosen Bereich in Verbindung. Dadurch wird auf einfache Art und Weise gewährleistet, dass der Radialwellendichtring im Betrieb der Zahnradpumpe nicht mit einem derart hohen Fluiddruck beaufschlagt wird, der die Dichtwirkung des Radialwellendichtringes beeinträchtigt.

Gemäß einem weiteren Aspekt der vorliegenden Offenbarung wird eine Antriebsvorrichtung zum Einstellen eines Anstellwinkels von Propellerblättern eines Verstellpropellers, insbesondere eines Verstellpropellers eines Luftfahrzeuges, mit einer vorstehend näher beschriebenen Zahnradpumpe betrieben. Eine solche Antriebsvorrichtung weist einen einfachen konstruktiven Aufbau auf und benötigt zusätzlich nur einen geringen Bauraum. Des Weiteren ist die Antriebsvorrichtung gemäß der vorliegenden Offenbarung durch ein geringes Gesamtgewicht gekennzeichnet.

Eine der Wellen der Zahnradpumpe kann über eine flexible Verbindungseinheit mit einer Antriebswelle einer Antriebseinheit drehfest verbunden sein. Dann sind im Betrieb auftretende Achsversätze sowie Verkippungen zwischen der Welle der Zahnradpumpe und der Antriebswelle und daraus resultierende Verschränkungen, die auch durch Fluchtungsfehler oder Fertigungstoleranzen verursacht werden, auf einfache Art und Weise ausgleichbar.

Bei einer konstruktiv einfachen und mit geringem Aufwand montierbaren Ausführungsform der Antriebsvorrichtung gemäß der vorliegenden Offenbarung umfasst die flexible Verbindungseinheit axial-, radial- und winkelbewegliche Zahnkupplungen.

Die Zahnkupplungen können bei einer bauraumgünstigen sowie konstruktiv einfachen Ausführung der Antriebsvorrichtung eine gemeinsame Hülse mit Innenverzahnungen aufweisen, wobei die Antriebswelle mit einer balligen Außenverzahnung und die Welle der Zahnradpumpe mit einer balligen Außenverzahnung jeweils in eine der Innenverzahnungen der Hülse eingreifen.

Bei einer hierzu alternativen Ausführungsform der Antriebsvorrichtung gemäß der vorliegenden Offenbarung sind die Zahnkupplungen jeweils im Bereich von Wellenenden einer Verbindungswelle vorgesehen, die endseitig jeweils mit balligen Außenverzahnungen ausgeführt ist. Dann besteht die Möglichkeit, dass die Verbindungswelle mit den balligen Außenverzahnungen jeweils in eine Innenverzahnung der Welle der Zahnradpumpe und in eine Innenverzahnung der Antriebswelle eingreift. Dann kann einerseits ein Antriebsmoment der Antriebseinheit übertragen werden und andererseits können Achsversätze zwischen der Antriebswelle und der Welle der Zahnradpumpe mit geringem konstruktivem Aufwand Weise ausgeglichen werden.

Die Antriebswelle der Antriebseinheit kann mit einer Leitung ausgebildet sein, die zur Weiterleitung von Fluid aus der Welle in die Antriebswelle im Bereich der Verbindungseinheit mit der Leitung der Welle der Zahnradpumpe fluidisch in Verbindung steht. Eine derart ausgeführte Antriebsvorrichtung ist durch eine geringe Bauteilanzahl gekennzeichnet, was sich wiederum positiv auf die Herstellkosten und auch auf das Bauteilgewicht der Antriebsvorrichtung auswirkt.

Die Verbindungseinheit kann eine Dichtungsmanschette umfassen, die umgreift das Wellenende der Welle der Zahnradpumpe radial, das der Antriebswelle der Antriebseinheit zugewandt ist. Des Weiteren kann die Dichtungsmanschette auch das Wellenende der Antriebswelle der Antriebseinheit in Umfangsrichtung umgreifen, das der Welle zugewandt ist. Dann dichtet die Dichtungsmanschette den Übergang für das Fluid zwischen der Leitung der Welle und der Leitung in der Antriebswelle ab. Dies bietet mit geringem konstruktiven Aufwand zusätzlich die Möglichkeit, Achsversätze zwischen den Drehachsen der Welle und der Antriebswelle auf konstruktiv einfache und kostengünstige Art und Weise im Bereich der Verbindungseinheit auszugleichen und den hydraulischen Pfad des Fluids bzw. des Öls durch die Antriebsvorrichtung in gewünschtem Umfang gegenüber der Umgebung abzudichten.

Des Weiteren besteht die Möglichkeit, dass in radialer Richtung zwischen der Dichtungsmanschette und dem Wellenende sowie zwischen der Dichtungsmanschette und dem Wellenende der Welle der Zahnradpumpe jeweils eine Dichtung vorgesehen ist. Dabei kann es beispielsweise vorgesehen sein, dass die Dichtungen als sogenannte U-Dichtungen ausgeführt sind, deren Dichtwirkung mit steigendem Druck innerhalb der Dichtungsmanschette ansteigt.

Die Führung des Öls durch die Welle der Zahnradpumpe und die Leitung der Antriebswelle in Verbindung mit der flexiblen Verbindungseinheit bietet auf einfache Art und Weise die Möglichkeit, den Ölpfad ohne eine Verschleiß begünstigende Relativbewegung zwischen den Dichtungen radial innerhalb der Dichtungsmanschette und radial außerhalb der Welle der Zahnradpumpe und der Antriebswelle abzudichten.

Wenn in Einbaulage der Antriebsvorrichtung in Hochrichtung der Antriebsvorrichtung unterhalb der Zahnradpumpe ein Ölreservoir vorgesehen ist, mit dem die Saugseite der Zahnradpumpe und der Axialspalt fluidisch in Verbindung stehen, ist Leckageöl ohne zusätzlichen konstruktiven Aufwand von der Zahnradpumpe und der hydraulischen Verbindung zwischen der Zahnradpumpe und der Antriebswelle schwerkraftgetrieben in das Ölreservoir einleitbar bzw. abführbar.

Die Antriebseinheit der Antriebsvorrichtung kann bei einer durch eine hohe Leistungsdichte gekennzeichneten Ausführungsform der Antriebsvorrichtung mit einer elektrischen Maschine ausgeführt sein.

Die Förderseite der Zahnradpumpe kann mit einer Versorgungsleitung einer Druckregeleinrichtung in Verbindung stehen, in dessen Bereich ein hydraulischer Regeldruck zur Betätigung eines Verstellpropellers geregelt eingestellt wird. Dadurch kann auf einfache Art und Weise Kavitation im Bereich der Saugseite der Druckregeleinrichtung vermieden werden.

Zusätzlich besteht die Möglichkeit, dass eine Regeldruck führende Leitung der Druckregeleinrichtung mit der Leitung der Welle verbunden ist. Dann kann ein Verstellpropeller mit geringem Dichtaufwand bei gleichzeitig geringem Verschleiß im Bereich von Dichtungen von der Druckregeleinrichtung betätigt werden.

Die Regeldruck führende Leitung kann über eine Ventileinheit mit der Saugseite der Zahnradpumpe und/oder mit dem Ölreservoir verbunden sein. Dies bietet auf konstruktiv einfache Art und Weise die Möglichkeit, einen unzulässig hohen Druckanstieg im Bereich der Druckregeleinrichtung zu vermeiden. Dies ist der Fall, da überschüssiges Drucköl, das von der Druckregeleinrichtung zur Verfügung gestellt wird, auf konstruktiv einfache Art und Weise in Druckbereiche der Antriebsvorrichtung ableitbar ist, die jeweils ein geringeres Druckniveau aufweisen als die Regeldruck führende Leitung der Druckregeleinrichtung.

Wird das Öl beispielsweise aus der Regeldruck führenden Leitung zumindest teilweise in Richtung der Förderseite der Zahnradpumpe geleitet, ist die Antriebsvorrichtung aufgrund der Saugaufladung der Zahnradpumpe mit einem hohen Wirkungsgrad betreibbar.

Wird das aus der Druckregeleinrichtung austretende und Regeldruck aufweisende Öl in das Ölreservoir zurückgeführt, wird ein unerwünscht hoher Temperaturanstieg im Bereich der Zahnradpumpe und der Druckregeleinrichtung mit geringem Aufwand vermieden.

Mündet eine Ablaufleitung der Druckregeleinrichtung, über die Leckageöl der Druckregeleinrichtung aus dieser ausleitbar ist, in das Ölreservoir, wird ein Ölverlust der Antriebsvorrichtung auf konstruktiv einfache Art und Weise gering gehalten.

Darüber hinaus besteht die Möglichkeit, dass die Zahnradpumpe über eine Ansaugleitung aus einem Bereich des Ölreservoirs Öl ansaugt, in dem ein magnetischer Spandetektor angeordnet ist. Wenn ein Mündungsbereich der Ansaugleitung und der Spandetektor so im Ölreservoir angeordnet sind, dass das Öl vor dem Eintritt in die Ansaugleitung an dem Spandetektor vorbeiströmt, können metallische Späne, die vom Öl in das Ölreservoir eingetragen werden, vom magnetischen Spandetektor zurückgehalten werden. Dies bietet beispielsweise während einer Wartung der Antriebsvorrichtung die Möglichkeit, Verschleiß im Bereich der Antriebsvorrichtung zu erkennen, wenn am Spandetektor Späne anheften.

Das Ölreservoir kann gegenüber der Umgebung abgedichtet sein, um einen unerwünschten Ölaustritt aus dem Ölreservoir in Richtung der Umgebung zu vermeiden. Steht das Ölreservoir über eine Entlüftungsleitung mit der Umgebung in Verbindung, werden im Betrieb der Antriebsvorrichtung sowie während Befüllvorgängen des Ölreservoirs unerwünscht hohe Drücke im Inneren des Ölreservoirs auf einfache Art und Weise vermieden.

Gemäß einem weiteren Aspekt der vorliegenden Offenbarung wird ein Verstellpropeller mit einer vorstehend näher beschriebenen Antriebsvorrichtung zur Verfügung gestellt.

Die Leitung in der Antriebswelle der Antriebseinheit kann mit einer hydraulischen Verstelleinheit in Verbindung stehen, die mit dem hydraulischen Regeldruck der Druckregeleinrichtung beaufschlagbare Kolben umfasst. Die Kolben können vom hydraulischen Regeldruck gegen Federn in axialer Richtung verstellbar ausgeführt sein, wobei Anstellwinkel von Propellerblättern des Verstellpropellers gemäß der vorliegenden Offenbarung in Abhängigkeit von axialen Stellungen der Kolben variieren.

Bei einer Weiterbildung des Verstellpropellers gemäß der vorliegenden Offenbarung kann das Öl aus der hydraulischen Verstelleinheit durch die Leitung der Antriebswelle der Antriebseinheit in das Ölreservoir führbar sein, um die Anstellwinkel der Propellerblätter zu variieren.

Die vorliegende Offenbarung ist nicht auf die angegebenen Kombinationen der Merkmale der nebengeordneten Ansprüche oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen und unmittelbar aus der Zeichnung hervorgehen, miteinander zu kombinieren. Die Bezugnahme der Ansprüche auf die Zeichnungen durch die Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ausführungsbeispiele des Gegenstandes gemäß der vorliegenden Offenbarung werden, ohne hierauf beschränkt zu sein, anhand der Zeichnung näher erläutert. Dabei zeigt:
- Fig. 1: eine schematisierte Längsschnittansicht eines Verstellpropellers mit einer Antriebsvorrichtung, die mit einer Zahnradpumpe ausgeführt ist;
- Fig. 2: eine vergrößerte Teilschnittansicht eines Bereiches der Antriebsvorrichtung gemäß Fig. 1, der die Zahnradpumpe umfasst;
- Fig. 3: eine weitere vereinfachte Teilschnittansicht der Antriebsvorrichtung, in der mehrere Leitungen der Antriebsvorrichtung dargestellt sind;
- Fig. 4: eine vergrößerte dreidimensionale Schnittansicht eines weiteren Bereiches der Antriebsvorrichtung entlang einer in Fig. 2 näher gekennzeichneten Schnittlinie IV-IV;
- Fig. 5: eine vergrößerte Teillängsschnittansicht eines Ölreservoirs der Antriebsvorrichtung; und
- Fig. 6: eine Seitenansicht eines Teils einer Antriebseinheit und des Ölreservoirs der Antriebsvorrichtung.

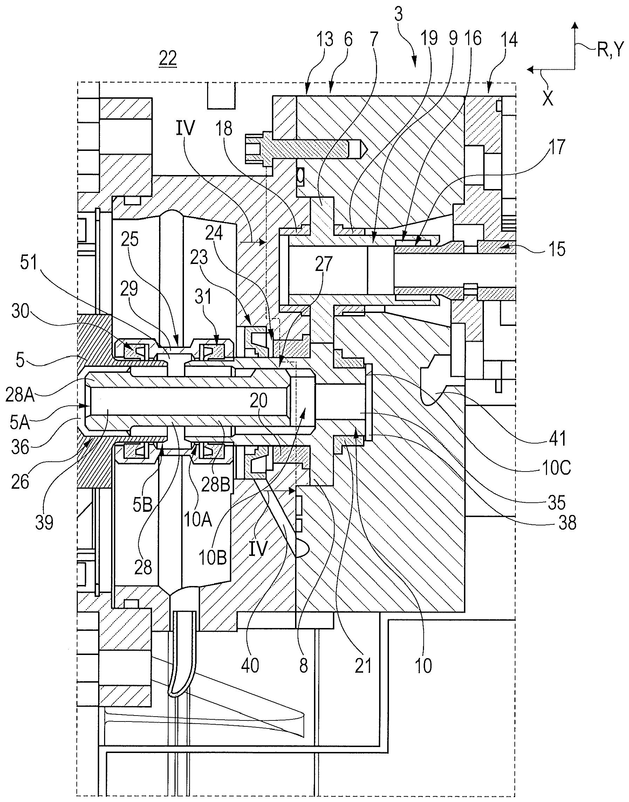

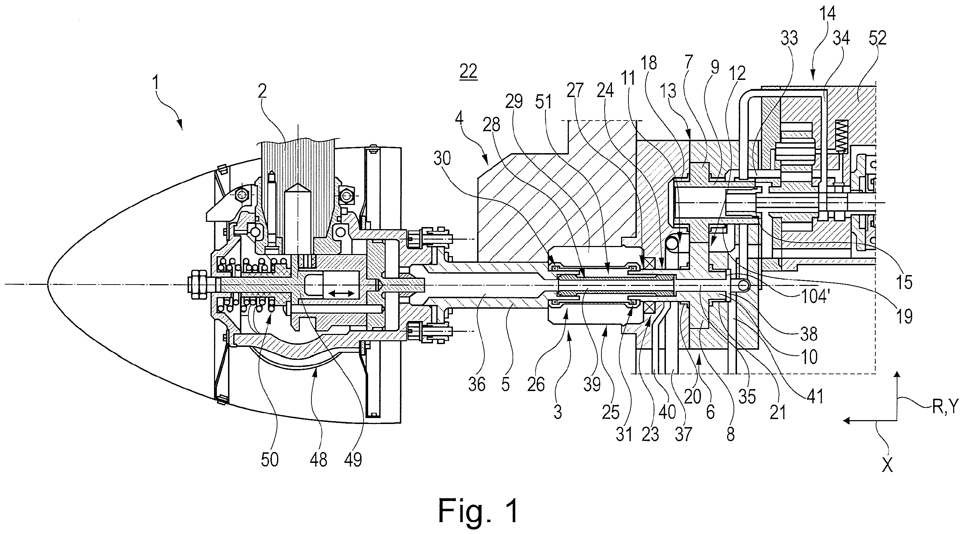

Fig. 1 zeigt eine stark vereinfachte Darstellung eines Verstellpropellers 1, dessen Propellerblätter 2 von einer Antriebsvorrichtung 3 ansteuerbar sind, um einen Anstellwinkel der Propellerblätter 2 zu variieren und an verschiedene Betriebssituationen anzupassen. Bei dem vorliegend in der Zeichnung dargestellten Ausführungsbeispiel des Verstellpropellers 1 handelt es sich um eine Luftschraube, deren Blatt-Steigung (Pitch) am Boden oder während des Fluges des mit dem Verstellpropeller 1 ausgeführten Luftfahrzeuges verstellt werden kann.

Die Antriebsvorrichtung 3 umfasst eine Antriebseinheit 4, die vorliegend mit einem Elektromotor ausgeführt ist. Eine Antriebswelle 5 der Antriebseinheit 4 steht mit einer hydraulischen Zahnradpumpe 6 in Antriebsverbindung. Die Zahnradpumpe 6 ist als Außenzahnradpumpe ausgeführt.

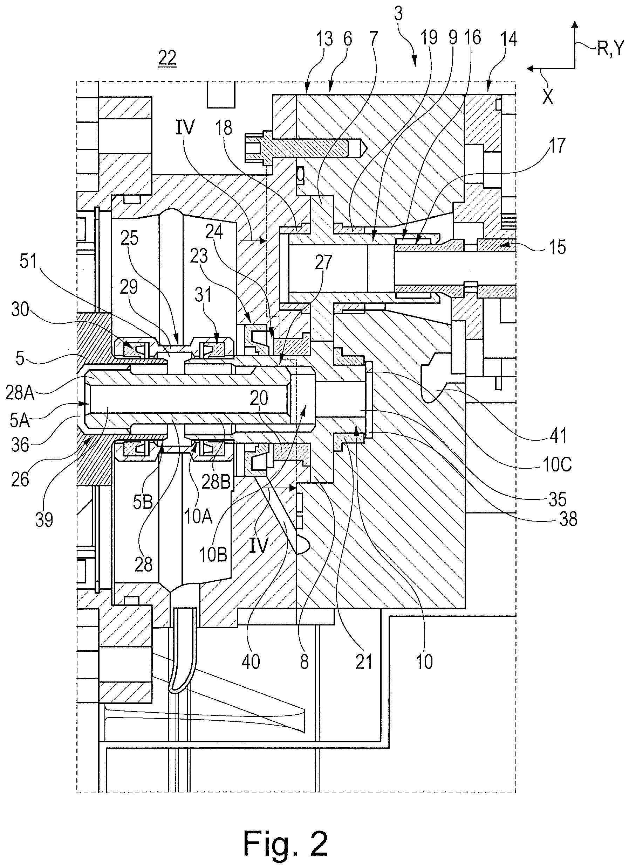

Dabei umfasst die Zahnradpumpe 6 zwei Zahnräder 7, 8, die miteinander in Eingriff stehen. Die Zahnräder 7, 8 sind in der in Fig. 2 näher dargestellten Art und Weise jeweils drehfest mit einer Welle 9, 10 verbunden und trennen eine Saugseite 11 der Zahnradpumpe 6 von einer Förderseite 12 dahingehend, dass über die Saugseite 11 angesaugtes Öl zwischen den Zahnrädern 7, 8 verdichtet und in an sich bekannter Art und Weise der Förderseite 12 zugeführt wird.

Die Welle 10 des Zahnrades 8 ist drehfest mit der Antriebswelle 5 der Antriebseinheit 4 verbunden. Die Welle 9 des Zahnrades 7 steht über eine Koppelwelle 15 mit einer Druckregeleinrichtung 14 in Antriebsverbindung, um die Druckregeleinrichtung 14, die einen sogenannten Propellerregler darstellt, über die Zahnradpumpe 6 rotatorisch von der Antriebseinheit 4 antreiben zu können. Ein Übersetzungsverhältnis zwischen den Zahnrädern 7 und 8 variiert in Abhängigkeit des jeweils vorliegenden Anwendungsfalles, um eine Drehzahl der Koppelwelle 15 entsprechend einzustellen.

Das Übersetzungsverhältnis zwischen der Drehzahl des Zahnrades 7 und der Drehzahl des Zahnrades 8 kann anwendungsfallabhängig Werte in einem Bereich von 0,2 bis 5 aufweisen. Dabei wird die Drehzahl der Antriebswelle 5 im Bereich der Zahnradpumpe 6 bei Übersetzungsverhältnissen größer eins ins Langsame übersetzt und die Druckregeleinrichtung 14 mit einer Drehzahl der Koppelwelle 15 antrieben, die kleiner ist als die Drehzahl der Antriebswelle 5. Im Unterschied dazu wird die Drehzahl der Antriebswelle 5 im Bereich der Zahnradpumpe 6 bei Übersetzungsverhältnissen kleiner eins ins Schnelle übersetzt und die Druckregeleinrichtung 14 mit einer Drehzahl der Koppelwelle 15 antrieben, die größer ist als die Drehzahl der Antriebswelle 5.

Die Wellen 9, 10, die Antriebswelle 5 sowie die Koppelwelle 15 der Druckregeleinrichtung 14 sind jeweils als Hohlwellen ausgebildet. Dabei ist die Welle 9 mit einem innenseitigen Keilwellenprofil 16 ausgeführt, das mit einem außenseitigen Keilwellenprofil 17 der Koppelwelle 15 bzw. der Antriebswelle der Druckregeleinrichtung 14 in Eingriff steht. Des Weiteren sind die Wellen 9 und 10 über Lagerbuchsen 18, 19 und 20, 21 drehbar im Gehäuse 13 der Zahnradpumpe 6 gelagert. Die Lagerbuchsen 18, 19 und 20, 21 dichten die Saugseite 11 und die Förderseite 12 gegenüber einer Umgebung 22 der Zahnradpumpe 6 ab. Zusätzlich ist in axialer Richtung X zwischen der Lagerbuchse 20 der Welle 10 und einem Wellenende 10A der Welle 10 ein Radialwellendichtring 23 vorgesehen, mittels dem ein Axialspalt 24 zwischen der Welle 10 und dem Gehäuse 13 gegen einen Ölaustritt in Richtung der Umgebung 22 abgedichtet ist.

Die Welle 10 ist vorliegend über eine flexible Verbindungseinheit 25 mit der Antriebswelle 5 der Antriebseinheit 4 drehfest verbunden. Die flexible Verbindungseinheit 25 ermöglicht relative Verschiebungen zwischen der Welle 10 und der Antriebswelle 5 auszugleichen. Dabei ist von Vorteil, dass durch den Ausgleich von Relativbewegungen zwischen der Antriebswelle 5 und dem Zahnrad 8 auf einfache Art und Weise Überlastungen und Beschädigungen der Gleitlager im Bereich der Lagerbuchsen 18 bis 21 vermieden werden.

Hierfür umfasst die flexible Verbindungseinheit 25 zwei axial-, radial- und winkelbewegliche Zahnkupplungen 26 und 27. Die Verbindungseinheit 25 weist eine Verbindungswelle 28 auf, die endseitig jeweils mit balligen Außenverzahnungen 28A, 28B ausgeführt ist, die Teile der Zahnkupplungen 26, 27 darstellen. Die Verbindungswelle 28 greift mit der balligen Außenverzahnung 28A in eine Innenverzahnung 5A der Antriebswelle 5 ein, während die ballige Außenverzahnung 28B mit einer Innenverzahnung 10B der Welle 10 in Eingriff steht. Die Abmessungen der balligen Außenverzahnungen 28A und 28B der Verbindungswelle 28 sind gleich groß, um Axialkräfte unter statischen Druckverhältnissen zu vermeiden.

Darüber hinaus umfasst die Verbindungseinheit 25 eine Dichtungsmanschette 29, die das Wellenende 10A der Welle 10 der Zahnradpumpe 6, das der Antriebswelle 5 der Antriebseinheit 4 zugewandt ist, und ein Wellenende 5B der Antriebswelle 5, das der Welle 10 zugewandt ist, jeweils radial umgreift. In radialer Richtung R ist zwischen der Dichtungsmanschette 29 und dem Wellenende 5B der Antriebswelle 5 sowie zwischen der Dichtungsmanschette 29 und dem Wellenende 10A der Welle 10 der Zahnradpumpe 6 jeweils eine Dichtung 30, 31 vorgesehen. Die Dichtungen 30, 31 sind vorliegend jeweils als sogenannte U-Dichtringe ausgeführt, deren Dichtwirkung mit steigendem Druck radial innerhalb der Dichtungsmanschette 29 ansteigt. Auf der Außenseite der Antriebswelle 5 kann eine Führungslippe oder dergleichen vorgesehen sein, um die Dichtungsmanschette 29 sowie die Dichtung 30 auf einfache Art und Weise montieren zu können.

In Einbaulage der Antriebsvorrichtung 3 ist in Hochrichtung Y der Antriebsvorrichtung 3 unterhalb der Zahnradpumpe 6 ein Ölreservoir 32 vorgesehen, mit dem die Saugseite 11 der Zahnradpumpe 6 und der Axialspalt 24 fluidisch in Verbindung stehen.

Die Förderseite 12 der Zahnradpumpe 6 steht mit einer Versorgungsleitung 33 der Druckregeleinrichtung 14 fluidisch in Verbindung. Zusätzlich ist eine Regeldruck führende Leitung 34 der Druckregeleinrichtung 14 fluidisch mit einer Leitung 35 verbunden, die durch die Welle 10 führt. Des Weiteren ist die Antriebswelle 5 mit einer Leitung 36 ausgebildet, die im Bereich der Verbindungseinheit 25 mit der Leitung 35 der Welle 10 der Zahnradpumpe 6 zur Weiterleitung von Fluid aus der Welle 10 in die Antriebswelle 5 fluidisch verbunden ist.

Die Zahnradpumpe 6 saugt im Betrieb der Antriebsvorrichtung 3 bzw. des Verstellpropellers 1 Öl aus dem Ölreservoir 32 über eine Ansaugleitung 37 an. Das von der Zahnradpumpe 6 angesaugte Öl wird im Bereich der Zahnradpumpe 6, die von der Antriebseinheit 4 über die Antriebswelle 5 und die Welle 10 angetrieben wird, in an sich bekannter Art und Weise durch die dann miteinander in Eingriff stehenden Zahnräder 7 und 8 verdichtet und von der Förderseite 12 in die Versorgungsleitung 33 der Druckregeleinrichtung 14 eingeleitet. Von der Versorgungsleitung 33 der Druckregeleinrichtung 14 gelangt das Öl in die Druckregeleinrichtung 14, in deren Bereich das zugeführte Öl weiter verdichtet wird.

Das im Bereich der Druckregeleinrichtung 14 verdichtete Öl wird über die Regeldruck führende Leitung 34 in das Gehäuse 13 der Zahnradpumpe 6 eingeleitet. Dabei mündet die Regeldruck führende Leitung 34 in einen Gehäusebereich 38, der vom Gehäuse 13 der Zahnradpumpe 6 und einer Stirnseite 10C der Welle 10 sowie der Lagerbuchse 21 begrenzt ist. Der Gehäusebereich 38 steht fluidisch mit der Leitung 35 der Welle 10 in Verbindung, womit das Öl aus der Regeldruck führenden Leitung 34 zunächst in den Gehäusebereich 38 und von dort in die Leitung 35 der Welle 10 eingeleitet wird.

Der Gehäusebereich 38 wird durch die Lagerbuchse 21 sowohl gegenüber dem Gehäuse 13 als auch gegenüber der Förderseite 12 der Zahnradpumpe 6 abgedichtet. Das aus der Regeldruck führenden Leitung 34 in die Leitung 35 einströmende Drucköl wird in eine Leitung 39 der Verbindungswelle 28 eingeleitet, die mit der Leitung 36 der Antriebswelle 5 in Verbindung steht.

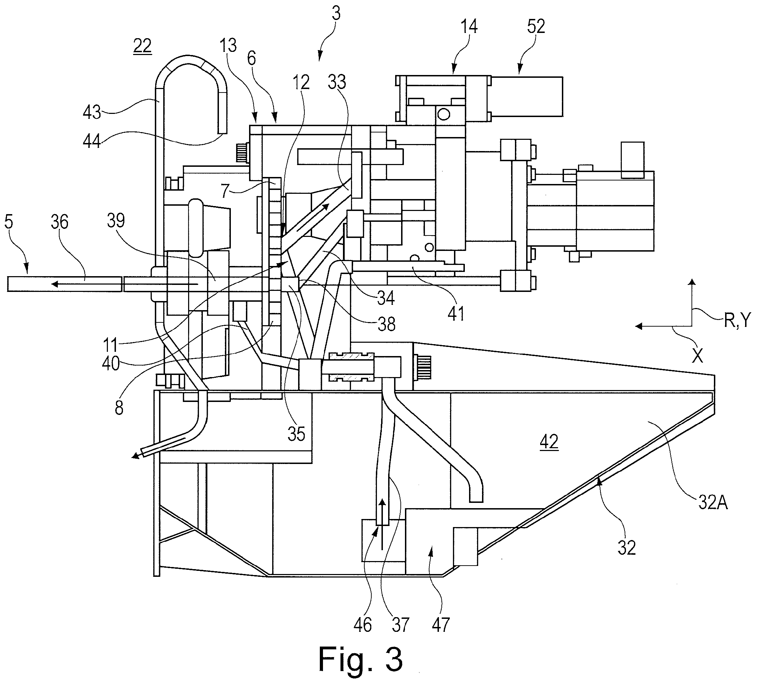

Der Axialspalt 24 steht zwischen der Lagerbuchse 20 und dem Radialwellendichtring 23 in der in Fig. 3 näher gezeigten Art und Weise über eine im Gehäuse 13 der Zahnradpumpe 6 verlaufende Entlüftungsleitung 40 mit dem Ölreservoir 32 in Verbindung. Das Ölreservoir 32 stellt vorliegend einen sogenannten drucklosen Bereich der Antriebsvorrichtung 3 dar, dessen Innendruck im Wesentlichen dem atmosphärische Umgebungsdruck des Verstellpropellers 1 entspricht. Dadurch werden im Axialspalt 24 unzulässig hohe Drücke auf einfache Art und Weise vermieden, die ohne die Entlüftungsleitung 40 aufgrund von Leckageöl entstehen, das von der Förderseite 12 der Zahnradpumpe 6 in den Axialspalt 24 eintritt. Zusätzlich mündet eine Ablaufleitung 41 der Druckregeleinrichtung 14 in das Ölreservoir 32, über die Leckageöl der Druckregeleinrichtung 14 in das Ölreservoir 32 zurückführbar ist. Des Weiteren ist das Ölreservoir 32 mit einer Ölstandskontrolle ausgeführt, wobei die Ölstandskontrolle sowohl mit einem Sichtglas und/oder mit einer elektronischen Füllstandskontrolle ausgeführt sein kann.

Um einen unerwünschten Ölaustritt aus dem Ölreservoir 32 in Richtung der Umgebung 22 zu vermeiden, ist das Ölreservoir 32 als geschlossenes bzw. gegenüber der Umgebung 22 abgedichtetes System ausgeführt. Damit jedoch ein unerwünschter Druckanstieg im Ölreservoir 32 vermieden wird, steht ein Innenraum 42 des Ölreservoirs 32 über eine Entlüftungsleitung 43 mit der Umgebung 22 in Verbindung. Dabei ist ein Mündungsbereich 44 der Lüftungsleitung 43 in Einbaulage des Verstellpropellers 1 in einem Luftfahrzeug derart oberhalb des Ölreservoirs 32 angeordnet, dass der Mündungsbereich 44 in allen Fluglagen eines Luftfahrzeuges, d.h. in üblichen Fluglagen während eines Horizontalfluges, eines Steigfluges oder eines Sinkfluges, oberhalb des Ölreservoirs 32 angeordnet ist. Dadurch wird ein Ölaustritt aus dem Ölreservoir 32 über die Entlüftungsleitung 43 in Richtung der Umgebung 22 sicher vermieden.

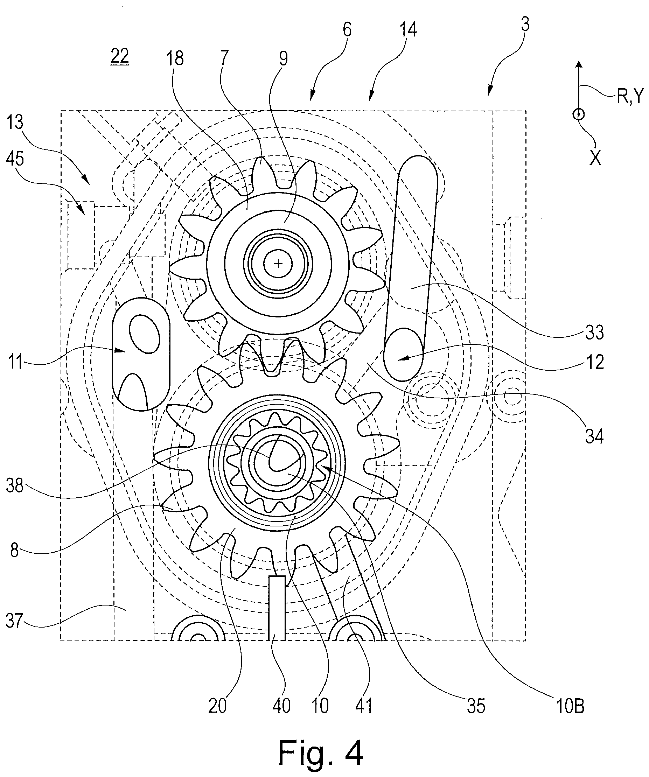

Fig. 4 zeigt eine vergrößerte dreidimensionale Teilschnittansicht eines Bereiches der Antriebsvorrichtung 3, in dem die Zahnradpumpe 6 angeordnet ist. Der Darstellung gemäß Fig. 3 ist entnehmbar, dass die Regeldruck führende Leitung 34 der Druckregeleinrichtung 14 über eine Ventileinheit 45 mit der Saugseite 11 der Zahnradpumpe 6 verbindbar ist, um unzulässig hohe Drücke im Bereich der Druckregeleinrichtung 14 auf konstruktiv einfache Art und Weise zu vermeiden. Dabei ist die Rückführung von Drucköl aus der Druckregeleinrichtung 14 in Richtung der Saugseite 11 der Zahnradpumpe 6 zudem energetisch günstig, da dann im Bereich der Zahnradpumpe 6 weniger Verdichtungsarbeit zu leisten ist.

In Abhängigkeit des jeweils vorliegenden Anwendungsfalles besteht im Kombination dazu oder alternativ hierzu auch die Möglichkeit, die Regeldruck führende Leitung 34 der Druckregeleinrichtung 14 über die Ventileinheit 45 mit dem Ölreservoir 32 in Verbindung zu bringen, um Öl zur Druckbegrenzung im Bereich der Druckregeleinrichtung 14 aus der Regeldruck führenden Leitung 34 abzuleiten. Dies hat den Vorteil, dass überschüssiges Öl nicht im Kreis zwischen der Zahnradpumpe 6 und der Druckregeleinrichtung 14 geführt wird und sich im Betrieb unzulässig erwärmt.

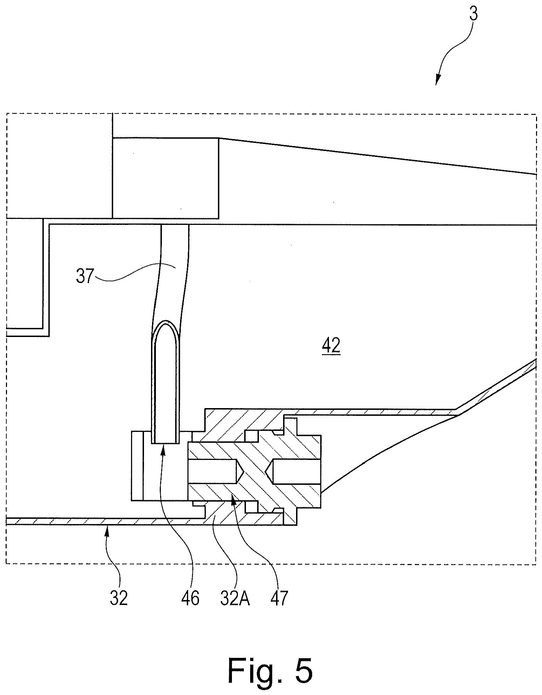

Fig. 5 zeigt eine vergrößerte Teilschnittansicht des Ölreservoirs 32, in dem ein Mündungsbereich 46 der Ansaugleitung 37 im Innenraum 42 des Ölreservoirs 32 angeordnet ist. Zusätzlich ist in einem unteren Bereich des Ölreservoirs 32 ein magnetischer Spandetektor 47 vorgesehen, an dem Metallspäne, die durch das Öl in das Ölreservoir 32 eingetragen werden, aufgrund der magnetischen Wirkung haften bleiben. Hierfür sind der Mündungsbereich 46 der Ansaugleitung 37 und der Spandetektor 47 so aufeinander abgestimmt im Ölreservoir 32 angeordnet, dass das Öl vor dem Eintritt in die Ansaugleitung 37 an dem Spandetektor 47 vorbeiströmt. Bei einer bevorzugten Ausführungsform der Antriebsvorrichtung 3 wird das Öl von der tiefsten Position des Ölreservoirs 32 knapp oberhalb des magnetischen Spandetektors 47 von der Zahnradpumpe 6 angesaugt, womit ein Ölvolumenstrom erzielt wird, der am magnetischen Spandetektor 47 vorbei strömt.

Der magnetische Spandetektor 47 kann beispielsweise über einen Bajonettverschluss oder dergleichen mit dem Wandbereich 32A des Ölreservoirs 32 verbunden sein und zusätzlich ein selbstdichtendes Gehäuse aufweisen. Des Weiteren ist das Ölreservoir 32 auf einfache Art und Weise über die Schnittstelle des magnetischen Spandetektors 47 mit Öl befüllbar und das Öl ist auch über die Schnittstelle des Spandetektors 47 aus dem Ölreservoir ablassbar.

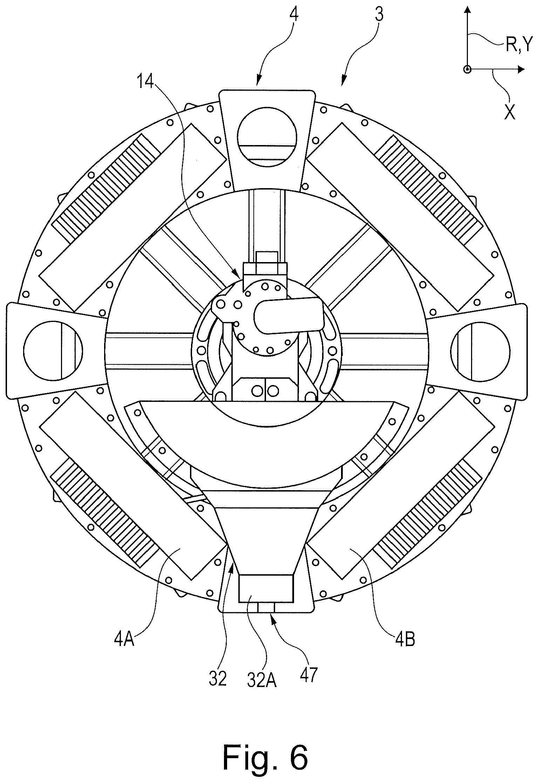

Fig. 6 zeigt zusätzlich eine Rückansicht der Antriebsvorrichtung 3, in der ein Teil der Antriebseinheit 4 und das Ölreservoir 32 dargestellt sind. Aus der Ansicht gemäß Fig. 6 geht hervor, dass sich das Ölreservoir 32 in Hochrichtung Y nach unten zwischen Elementen 4A und 4B der Antriebseinheit 4 hindurch erstreckt, wobei der magnetische Spandetektor 47 nach unten gerichtet gegenüber einem Wandbereich 32A des Ölreservoirs 32 vorkragt. Dadurch ist der magnetische Spandetektor 47 auf einfache Art und Weise von einer Bedienperson aus dem Ölreservoir 32 entnehmbar. Dann ist über eine Sichtkontrolle des Spandetektors 47 verifizierbar, ob metallische Späne am Spandetektor 47 anhaften und mechanischer Verschleiß insbesondere im Bereich der Zahnradpumpe 6 und/oder der Druckregeleinrichtung 14 aufgetreten ist.

Die Leitung 36 der Antriebswelle 5 der Antriebseinheit 4 steht mit einer hydraulischen Verstelleinheit 48 des Verstellpropellers 1 in Verbindung. Die Verstelleinheit 48 umfasst Kolben 49, die vom hydraulischen Regeldruck der Druckregeleinrichtung 14 gegen Federn 50 in axialer Richtung verstellbar sind. Dabei variieren die Anstellwinkel der Propellerblätter 2 in Abhängigkeit der axialen Stellungen der Kolben 49.

Da die Welle 10 über die Verbindungswelle 28 drehfest mit der Antriebswelle 5 der Antriebseinheit 4 verbunden ist, rotieren die Welle 10 und die Antriebswelle 5 sowie die darauf angeordnete Dichtungsmanschette 29 mit der gleichen Drehzahl. Dies hat den Vorteil, dass die Dichtwirkung der Dichtungen 30 und 31 ohne Verschleiß erzeugende Differenzdrehzahlen dichtend an der Welle 10 und der Antriebswelle 5 anliegen. Damit wird im Betrieb der Antriebsvorrichtung 3 über die Dichtungsmanschette 29 ein Ölaustritt an der Koppelstelle zwischen der Welle 10 und der Antriebswelle 5 auf einfache und verschleißfreie Art und Weise vermieden.

Das in die Leitung 35 unter Druck eingeleitete Öl strömt einerseits durch die Leitung 39 der Verbindungswelle 28 in die Leitung 36 der Antriebswelle 5 ein. Zusätzlich strömt das Öl aus der Leitung 35 zwischen der Innenverzahnung 10B der Welle 10 und der balligen Außenverzahnung 28B der Verbindungswelle 28 in Richtung eines von der Dichtungsmanschette 29 begrenzten Radialraumes 51. Des Weiteren gelangt in den Radialraum 51 auch Öl aus der Leitung 36 der Antriebswelle 5 zwischen der Innenverzahnung 5A der Antriebswelle 5 und der balligen Au-ßenverzahnung 28A der Verbindungswelle 28.

Die in den in den Radialraum 51 eindringenden Ölströme bewirken einen Anstieg des Druckes im Radialraum 51, der an den Dichtungen 30 und 31 anliegt. Da die beiden Dichtungen 30 und 31 vorliegend als sogenannte U-Dichtungen ausgeführt sind, bewirkt der im Radialraum 51 vorherrschende hydraulische Druck, dass die Dichtungen 30 und 31 eine gewünscht hohe Dichtwirkung entfalten. Zusätzlich werden die Zahneingriffe zwischen der Verbindungswelle 28 und der Antriebswelle 5 sowie der Welle 10 durch das in den Radialraum 51 eindringende Öl geschmiert.

Zur Verstellung der Anstellwinkel der Propellerblätter 2 kann auch vorgesehen sein, dass die Kolben 49 von den Federn 50 gegen den von der Leitung 36 der Antriebswelle 5 anliegenden hydraulischen Druck verschoben werden. Dann wird das Öl aus der Leitung 36 der Antriebswelle 5 zurück in die Leitung 39 der Verbindungswelle 28 zurückgeführt. Im Anschluss daran wird das Öl durch die Leitung 35 der Welle 10 in die Regeldruck führende Leitung 34 der Druckregeleinrichtung 14 und von dort in die Ablaufleitung 41 eingeleitet. Über die Ablaufleitung 41 wird das Öl in das Ölreservoir 32 zurückgeführt.

Diese Rückführung des Drucköls während der Verstellung der Propellerblätter 2 bietet zusätzlich die Möglichkeit, die Leitungen 36, 35 mit geringem Aufwand zu entlüften, da von der Druckregeleinrichtung 14 in die Leitungen 34, 39 und 36 eingeleitete Luft dann mit dem Öl auf einfache Weise in Richtung des Ölreservoirs 32 ausgespült werden kann. Dies ist der Fall, da in den Radialraum 51 eingebrachte Luft und auch in die Leitungen 35, 39 und 36 mit dem Öl einströmende Luft im Betrieb der Antriebsvorrichtung 3 durch die Zentrifugalkraft, die im Betrieb am Öl und an der Luft angreift, radial nach innen gefördert wird.

Die Zahnräder 7 und 8 der Zahnradpumpe werden vorliegend für die Drehzahlmessung verwendet. Ein Drehzahlsensor misst die Drehzahl der Druckregeleinrichtung 14 auf der Förderseite 12 der Zahnradpumpe 6.

Ein Gehäuse 52 der Druckregeleinrichtung 14 dient als Schnittstelle und Halterung für die Druckregeleinrichtung 14. Dies bietet die Möglichkeit, die Antriebsvorrichtung 3 derart auszuführen, dass die Zahnradpumpe 6 und die Druckregeleinrichtung 14 als vormontierbare Einheit ein- und ausgebaut werden können. Somit kann die Zahnradpumpe 6 nach der Demontage des Ölreservoirs 32 gemeinsam mit der Druckregeleinrichtung 14 demontierbar werden. Hierfür ist das Ölreservoir 32 mit der Rückseite der Antriebseinheit 4 verschraubt.

### Bezugszeichenliste

- 1: Verstellpropeller
- 2: Propellerblatt
- 3: Antriebsvorrichtung
- 4: Antriebseinheit
- 4A, 4B: Elemente der Antriebseinheit
- 5: Antriebswelle
- 5A: Innenverzahnung der Antriebswelle
- 5B: Wellenende der Antriebswelle
- 6: Zahnradpumpe
- 7, 8: Zahnrad der Zahnradpumpe
- 9: Welle der Zahnradpumpe
- 10: Welle der Zahnradpumpe
- 10A: Wellenende der Welle 10
- 10B: Innenverzahnung der Welle 10
- 10C: Stirnseite der Welle 10
- 11: Saugseite der Zahnradpumpe
- 12: Förderseite der Zahnradpumpe
- 13: Gehäuse der Zahnradpumpe
- 14: Druckregeleinrichtung
- 15: Koppelwelle der Druckregeleinrichtung
- 16: innenseitiges Keilwellenprofil der Welle 9
- 17: außenseitiges Keilwellenprofil der Koppelwelle 15
- 18, 19: Lagerbuchse der Welle 9
- 20, 21: Lagerbuchse der Welle 10
- 22: Umgebung der Antriebsvorrichtung
- 23: Radialwellendichtring
- 24: Axialspalt
- 25: Verbindungseinheit
- 26: Zahnkupplung
- 27: Zahnkupplung
- 28: Verbindungswelle
- 28A, 28B: ballige Außenverzahnung der Verbindungswelle 28
- 29: Dichtungsmanschette
- 30, 31: Dichtung der Dichtungsmanschette
- 32: Ölreservoir
- 32A: Wandbereich des Ölreservoirs
- 33: Versorgungsleitung der Druckregeleinrichtung
- 34: Regeldruck führende Leitung der Druckregeleinrichtung
- 35: Leitung der Welle 10
- 36: Leitung der Antriebswelle 5
- 37: Ansaugleitung der Zahnradpumpe
- 38: Gehäusebereich der Zahnradpumpe 6
- 39: weitere Leitung der Verbindungswelle 28
- 40: Entlüftungsleitung des Axialspaltes 24
- 41: Ablaufleitung der Druckregeleinrichtung
- 42: Innenraum des Ölreservoirs
- 43: Entlüftungsleitung des Ölreservoirs
- 44: Mündungsbereich der Entlüftungsleitung 43
- 45: Ventileinheit
- 46: Mündungsbereich der Ansaugleitung 37
- 47: magnetischer Spandetektor
- 48: hydraulische Verstelleinheit
- 49: Kolben der hydraulischen Verstelleinheit
- 50: Feder der hydraulischen Verstelleinheit
- 51: Radialraum der Dichtungsmanschette
- 52: Gehäuse der Druckregeleinrichtung
- R: radiale Richtung
- X: axiale Richtung
- Y: Hochrichtung

## Patentansprüche

1. Zahnradpumpe (6) mit wenigstens zwei Zahnrädern (7, 8), die miteinander in Eingriff stehen, jeweils drehfest mit einer Welle (9, 10) verbunden sind und eine Saugseite (11) von einer Förderseite (12) trennen, wobei die Wellen (9, 10) drehbar in einem Gehäuse (13) gelagert sind, und wobei eine der Wellen (10) mit einer Antriebseinheit (4) und die andere Welle (9) mit einer von der Antriebseinheit (4) über die beiden Wellen (9, 10) anzutreibenden Druckregeleinrichtung (14) in Wirkverbindung bringbar ist.

2. Zahnradpumpe nach Anspruch 1, **dadurch gekennzeichnet, dass** die Förderseite (12) fluidisch mit einer Versorgungsleitung (33) der Druckregeleinrichtung (14) und eine Regeldruck führende Leitung (34) der Druckregeleinrichtung (14) fluidisch mit einer Leitung (35), die durch eine der Wellen (10) führt, verbindbar ist.

3. Zahnradpumpe nach Anspruch 1 oder 2, **dadurch gekennzeichnet, dass** ein Übersetzungsverhältnis zwischen den Zahnrädern (7, 8) ungleich eins ist.

4. Zahnradpumpe nach wenigstens einem der vorstehenden Ansprüche, **dadurch gekennzeichnet, dass** die Wellen (9, 10, 5, 28) jeweils als Hohlwellen ausgebildet sind.

5. Zahnradpumpe nach wenigstens einem der vorstehenden Ansprüche, **dadurch gekennzeichnet, dass** die Welle (9), die mit der anzutreibenden Druckregeleinrichtung (14) koppelbar ist, mit einem innenseitigen oder mit einem außenseitigen Keilwellenprofil (16) ausgeführt ist, das mit einem außenseitigen oder mit einem innenseitigen Keilwellenprofil (17) einer Antriebswelle (15) der Druckregeleinrichtung (14) in Eingriff bringbar ist.

6. Antriebsvorrichtung (3) zum Einstellen eines Anstellwinkels von Propellerblättern (2) eines Verstellpropellers (1) mit einer Zahnradpumpe (6) gemäß einem der Ansprüche 1 bis 5.

7. Antriebsvorrichtung nach Anspruch 6, **dadurch gekennzeichnet, dass** eine der Wellen (10) der Zahnradpumpe (6) über eine flexible Verbindungseinheit (25) mit einer Antriebswelle (5) einer Antriebseinheit (4) drehfest verbunden ist.

8. Antriebsvorrichtung nach Anspruch 7, **dadurch gekennzeichnet, dass** die flexible Verbindungseinheit (25) axial-, radial- und winkelbewegliche Zahnkupplungen (26, 27) umfasst.

9. Antriebsvorrichtung nach Anspruch 7 oder 8, **dadurch gekennzeichnet, dass** die Antriebswelle (5) mit einer Leitung (36) ausgebildet ist, die im Bereich der Verbindungseinheit (25) mit der Leitung (35) der Welle (10) der Zahnradpumpe (6) zur Weiterleitung von Fluid aus der Welle (10) in die Antriebswelle (5) fluidisch in Verbindung steht.

10. Antriebsvorrichtung nach einem der Ansprüche 6 bis 9, **dadurch gekennzeichnet, dass** in Einbaulage der Antriebsvorrichtung (3) in Hochrichtung (Y) der Antriebsvorrichtung (3) unterhalb der Zahnradpumpe (6) ein Ölreservoir (32) vorgesehen ist, mit dem die Saugseite (11) der Zahnradpumpe (6) und der Axialspalt (24) fluidisch in Verbindung stehen.

11. Antriebsvorrichtung nach einem der Ansprüche 7 bis 10, **dadurch gekennzeichnet, dass** die Antriebseinheit (4) eine elektrische Maschine umfasst.

12. Antriebsvorrichtung nach einem der Ansprüche 6 bis 11, **dadurch gekennzeichnet, dass** die Förderseite (12) der Zahnradpumpe (6) mit einer Versorgungsleitung (33) einer Druckregeleinrichtung (14) in Verbindung steht, in dessen Bereich ein hydraulischer Druck zur Betätigung eines Verstellpropellers (1) geregelt eingestellt wird.

13. Antriebsvorrichtung nach Anspruch 12, **dadurch gekennzeichnet, dass** eine Ablaufleitung (41) der Druckregeleinrichtung (14), über die Leckageöl der Druckregeleinrichtung (14) aus dieser ausleitbar ist, in das Ölreservoir (32) mündet.

14. Antriebsvorrichtung nach einem der Ansprüche 10 bis 13, **dadurch gekennzeichnet, dass** die Zahnradpumpe (6) Öl über eine Ansaugleitung (37) aus einem Bereich des Ölreservoirs (32) ansaugt, in dem ein magnetischer Spandetektor (47) angeordnet ist, wobei ein Mündungsbereich (46) der Ansaugleitung (37) und der Spandetektor (47) so im Ölreservoir (32) angeordnet sind, dass das Öl vor dem Eintritt in die Ansaugleitung (37) an dem Spandetektor (47) vorbeiströmt.

15. Verstellpropeller (1) mit einer Antriebsvorrichtung (3) gemäß einem der Ansprüche 6 bis 14.
